# EUROPÄISCHE PATENTSCHRIFT

(11) **EP 0 305 779 B1**
(45) Veröffentlichungstag und Bekanntmachung des Hinweises auf die Patenterteilung: **17.03.1993**
(21) Anmeldenummer: 88112987.8
(22) Anmeldetag: 10.08.1988
(51) Int. Cl.: F23G 5/32, F23G 5/04, F23G 5/46, F23J 15/00, F23L 15/04

(54) **Verfahren zur thermischen Entsorgung von Abfallstoffen**
Process for the thermal elimination of waste materials
Procédé pour l'élimination thermique des déchets

(30) Priorität: 02.09.1987 DE 3729210
(43) Veröffentlichungstag der Anmeldung: 08.03.1989
(73) Patentinhaber: Klöckner-Humboldt-Deutz Aktiengesellschaft, 51149 Köln (DE)
(72) Erfinder: Grigel, Wolfgang, Dr., D-5204 Lohmar 1 (DE); Hinterkeuser, Jakob, D-5205 Sankt Augustin 3 (DE); Waldhecker, Heinz-Dieter, D-5064 Rösrath 1 (DE); Rizzon, John, D-5064 Rösrath (DE); Pässler, Karlheinz, D-500 Köln 91 (DE)
(74) Vertreter: Beisner, Klaus

(56) Entgegenhaltungen:
- DE-A- 1 908 612
- FR-A- 2 431 660
- JOURNAL OF THE AIR POLLUTION CONTROL ASSOCIATION. vol. 38, no. 7, Juli 1988, PITTSBURGH US Seiten 941 - 945; C. C. Lee: "A Model Analysis of Metal Partitioning"
- Proceeding of the First International Conference on Circulating Fluidized Beds, Halifax, Nova Scotia, 18.-20. November 1985. Prabir Basu (Verfasser). 1986, Pergamon Press, Toronto Seiten 317-327 R. GRAF "First Operating Experience with a Dry Flue Desulfurization Process using a Circulating Fluid Bed"

## Beschreibung

Die Erfindung betrifft ein Verfahren zur thermischen Entsorgung von Abfallstoffen wie z. B. Klärschlamm, Sondermüll oder dergleichen, mit Trocknung und Verbrennung der Abfallstoffe, wobei die trockenen bzw. getrockneten Abfallstoffe in einem Zyklon bei hohen Temperaturen oberhalb 1500°C verbrannt werden unter Bildung einer schmelzflüssigen Schlacke und eines heißen Abgases, das mit den Trocknungsabgasen vermischt und das Mischgas in zwei Kühlstufen abgekühlt wird, wobei ein Teil des Mischgases als Trocknungsgas zur Trocknung bzw. Vorwärmung der Abfallstoffe verwendet wird.

Die wirtschaftliche und umweltverträgliche Beseitigung von Abfallstoffen wie z. B. Klärschlamm, Sondermüll oder dergleichen macht bekanntlich erhebliche Schwierigkeiten. Dies gilt insbesondere dann, wenn solche Abfallstoffe in üblichen Müllverbrennungsanlagen mit Rostfeuerungen verbrannt werden. Rostfeuerungen müssen mit hohen Luftüberschußzahlen betrieben werden, so daß große Mengen an Rauchgas mit relativ geringer Temperatur entstehen. Große Rauchgasmengen bedingen entsprechend große und damit kostenintensive Abgasreinigungsanlagen. Außerdem ist bei Rostfeuerungen nicht ausgeschlossen, daß die Brenntemperatur zumindest zeitweise unter 1.000°C fällt. Bei solchen Temperaturen zerfallen einige gefährliche Giftstoffe wie z. B. Dioxine noch nicht. Außerdem verflüchtigen sich bei solchen Temperaturen viele in den Abfallstoffe enthaltene Wertstoffe und/oder Schadstoffe nicht, so daß solche Stoffe in unerwünschter Weise in die Asche gelangen. Das heißt: Konventionelle Müllverbrennungsanlagen sind unwirtschaftlich, und es können sich wegen der Emission organischer Verbindungen sowie wegen der dabei anfallenden nicht laugungsresistenten Aschen Umweltbelastungen ergeben.

Aus dem Dokument DE-A-1 908 612 ist ein den Oberbegriff des Anspruchs 1 bildendes Verfahren zum Trocknen und Verbrennen von Abwasserschlamm bekannt, bei dem der Schlamm in einem Trommeltrockner getrocknet und anschließend in einem Zyklonofen bei so hohen Temperaturen verbrannt wird, daß Verbrennungsgase einer Temperatur zwischen 1.400°C und 1.600°C sowie Asche in flüssiger Form entstehen. Die Trocknerabgase und die Zyklonofenabgase werden miteinander vermischt und das Mischgas wird zum Teil als Trocknungsgas zum Trockner rezirkuliert, während der Rest des Mischgases nach einer zweistufigen Abgaskühlung in die Atmosphäre entlassen wird. Da Abwasserschlämme in der Regel immer Schadstoffe sowie auch Wertstoffe enthalten, besteht Interesse daran, diese Stoffe möglichst getrennt für sich aus den Schlämmen zurück zu gewinnen und jedenfalls nicht in die Atmosphäre austreten zu lassen. Diese Möglichkeit bietet aber das bekannte Verfahren nicht.

Der Erfindung liegt die Aufgabe zugrunde, ein Verfahren zu schaffen, mit dem umweltverträglich und doch wirtschaftlich Abfallstoffe wie z. B. Klärschlamm, Sondermüll oder dergleichen thermisch entsorgt werden können.

Diese Aufgabe wird mit den Maßnahmen des Kennzeichnungsteils des Anspruchs 1 gelöst. Vorteilhafte Weiterbildungen sind in den Unteransprüchen 2 bis 4 angegeben.

Das erfindungsgemäße Verfahren zur thermischen Entsorgung von Abfallstoffen ermöglicht es, die aus den Abfallstoffen in das heiße Abgas des Verbrennungszyklons bzw. Schmelzzyklons verflüchtigten Wertstoffe einerseits und Schadstoffe andererseits jeweils für sich getrennt zu erhalten, bevor das von diesen verflüchtigten Stoffen befreite Abgas in die Atmosphäre entlassen wird, indem aus dem Zyklonabgas nach einer ersten Kühlstufe im wesentlichen die aus den Abfallstoffen verflüchtigten metallischen Wertstoffe wie Ag, Zn, Pb enthaltende Wertstoffstäube und nach einer zweiten Kühlstufe bei niedrigerer Temperatur im wesentlichen die in der ersten Kühlstufe noch dampfförmig vorliegenden nichtmetallischen Schadstoffe wie Chloride, Sulfate, Fluoride etc. enthaltende schadstoffreiche Stäube nichtmetallischer Art jeweils durch partielle Kondensation abgeschieden werden, während der bei den hohen Temperaturen oberhalb 1.500°C im Zyklon sich nicht verflüchtigende Teil der umweltbelastenden Elemente der eingesetzten Abfallstoffe in der glasigen Schmelze/Schlacke des Zyklons laugungsresistent eingebunden wird, wobei diese Schlacke nach ihrer Erstarrung ein Material ergibt, das im Gegensatz zum in den thermischen Entsorgungsprozeß eingesetzten Abfallstoff bzw. Reststoff eine hohe Dichte aufweist und z. B. als Baumaterial verwendet werden kann. Bei einer Verbrennungstemperatur im Zyklon oberhalb 1.500°C, vorzugsweise bei etwa 1.600°C, werden alle für die Umwelt schädlichen organischen Verbindungen der eingesetzten Abfallstoffe zerstört. Die brüdenhaltigen geruchsbelästigenden Trocknerabgase werden zu deren Desodorierung mit den heißen Zyklonabgasen vermischt, wobei eine Temperatur von mindestens 800°C erreicht werden muß.

Das erfindungsgemäße Verfahren zur thermischen Entsorgung von Abfallstoffen wie z. B. Klärschlamm ist also besonders durch die getrennte Gewinnung der in den Abfallstoffen enthaltenen metallischen Wertstoffen einerseits und nichtmetallischen Schadstoffen andererseits charakterisiert. Diese Wertstoffe und Schadstoffe können jeweils einer weiteren Verwendung zugeführt werden, wodurch das erfindungsgemäße Entsorgungsverfahren wirtschaftlicher wird.

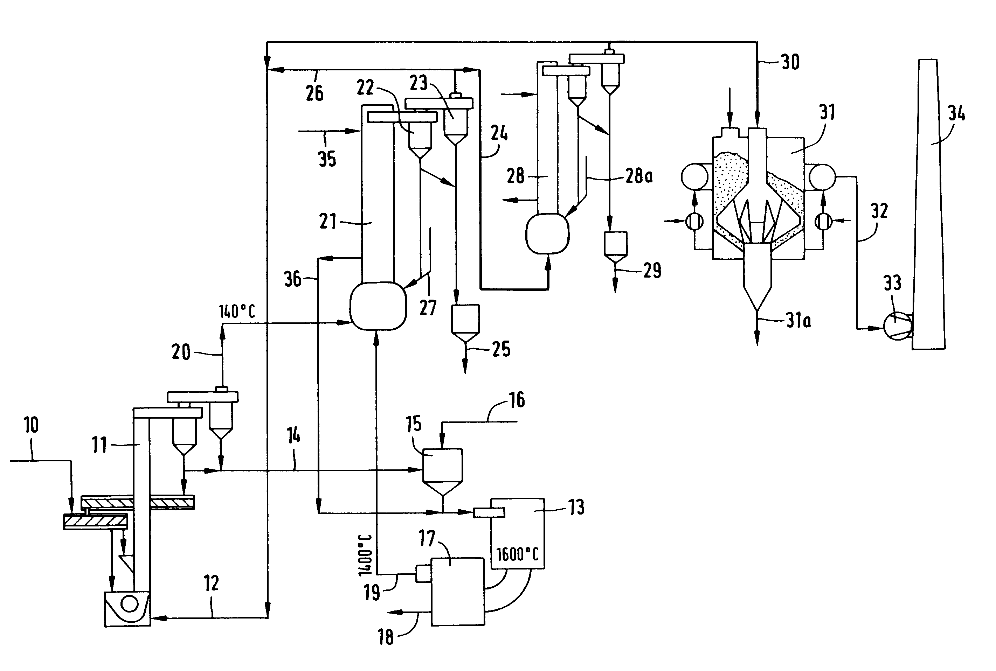

Die Erfindung und deren weiteren Merkmale und Vorteile werden anhand des in der Zeichnung schematisch dargestellten Ausführungsbeispieles näher erläutert.

Nach dem Ausführungsbeispiel der Zeichnung wird Klärschlamm (10), der auf eine Trockensubstanz von 25 bis 50 % mechanisch vorentwässert ist, in einem Stromtrockner (11) ggf. mit vorgeschalteter Vorzerkleinerungseinrichtung getrocknet. Als Trocknungsgas (12) mit einer Temperatur von etwa 500°C dient ein Teil der Abgase eines Zyklons (13), in welchem der auf 95 % Trockensubstanz getrocknete Klärschlamm (14) verbrannt wird. Mit (15) ist ein Zwischenbunker bezeichnet, über den ggf. auch andere Abfallstoffe (16) wie Altöl etc. dem Zyklon gleichzeitig zugegeben werden können Aus dem Zyklon (13), in dem z. B. eine Temperatur von 1600 °C herrscht, treten ein heißes Zyklonabgas sowie eine schmelzflüssige Schlacke in einen Ofen (17) ein, der zur Trennung in eine schadstoffarme, nach ihrer Verfestigung deponiefähige bzw. verwertbare Schlacke (18), die eine hohe Dichte aufweist einerseits und in etwa 1400 °C heißes Abgas (19) andererseits dient, welches aus den Abfallstoffen verflüchtigte Wertstoffe und Schadstoffe enthält.

Die brüdenhaltigen Trocknerabgase (20), welche eine Temperatur von etwa 140 °C aufweisen, werden zur Zerstörung der Geruchsstoffe mit den heißen Zyklonabgasen (19) vermischt. In einer ersten Kühlstufe (21), die vorzugsweise als zirkulierende Wirbelschicht ausgebildet ist, und den nachgeschalteten Zyklonen (22, 23) werden aus dem heißen Abgas (24) über den Zyklon (23) partiell kondensierte Wertstoffstäube (25), die z. B. Ag, Zn, Pb etc. enthalten, angereichert und abgezogen, während ein Teilstrom des Abgases (24) über Leitung (26) in den Stromtrockner (11) rezirkuliert wird. Zum Anfahren der Anlage wird in die Kühlstufe (21) über Leitung (27) Zusatzstaub eingeführt.

Nachdem das Zyklonabgas (24) von Wertstoffen befreit ist, wird es in einer vorzugsweise ähnlich wie die erste Kühlstufe (21) ausgebildeten zweiten Kühlstufe (28) mit zirkulierender Wirbelschicht auf etwa 300 °C abgekühlt, wobei aus dem Abgas schadstoffreiche Stäube (29) abgeschieden werden, die Chlor, Schwefel, Fluor etc. enthalten. Zur Abscheidung dieser Komponenten werden in die zweite Kühlstufe (28) Reagenzien (28a) eingebracht, z. B. Kalkhydrat. Das weitgehend abgekühlte Abgas (30) nach der zweiten Kühlstufe (28) wird zur Feinstentstaubung und Feinstgasreinigung dann noch durch ein Schüttschichtfilter (31) geleitet zur Abscheidung von Staubreststoffen (31a) und solcher Stoffe, die in den zwei Kühlstufen (21 und 28) nicht bzw. nicht vollständig kondensiert sind. Gereinigtes, der TA-Luft 1986 entsprechendes Abgas (32) wird über Saugzuggebläse (33) und Schornstein (34) abgezogen. Zur Reduzierung eines möglichen NOₓ-Gehaltes des Abgases kann diesem NH₃ zugesetzt werden.

Zur Wäremauskopplung aus der ersten Kühlstufe (21) wird durch diese ein Luftstrom (35) geleitet, der durch indirekte Wärmeübertragung der Kühlstufe (21) Wärme entnimmt, und der auf diese Weise vorerhitzte Luftstrom (36) wird als Sauerstoffträger in den Zyklon (13) eingeleitet.

Die Vorteile des erfindungsgemäßen Verfahrens sind im wesentlichen folgende: Wegen der hohen Reaktionstemperatur werden alle umweltbelastenden organischen Schadstoffe zerstört; die mineralischen Bestandteile werden als laugungsresistente, dichte Schlacke in verwertbarer Form gewonnen; die metallhaltigen Wertstoffe (Zink, Blei, Silber etc.) werden angereichert in einem Staub gewonnen; die nichtmetallhaltigen Schadstoffe (SO₂, Cl, F) werden abgeschieden; die TA-Luft 1986 wird eingehalten; es entsteht im Verfahren kein Abwasser; kompaktes Verbrennungssystem wegen der hohen Feuerraumbelastung (mindestens 2,5 GJ/m³ im Zyklon gegenüber 0,5 GJ/m³ im Drehrohrofen) und kleinere spezifische Abgasmenge ( = 1,1 im Zyklon gegenüber = 2 im Drehrohrofen); Verbrennung im Zyklon kann energieautark verlaufen; vergleichsweise geringe Betriebs - und Investitionskosten; zur Reduzierung der NOₓ-Bildung ist der Einsatz von Sauerstoff statt Verbrennungsluft möglich und vorteilhaft.

Als Beispiele der nach dem erfindungsgemäßen Verfahren zu entsorgenden Abfallstoffe werden genannt:
Kommunaler und industrieller Klärschlamm, mechanisch vorentwässtert; alle Sondermüllarten, sofern sie - ggf. nach Vorbehandlung - flüssig oder feinkörnig dosierbar sind (z. B. PCB, Altöl, Öl, Lackrückstände usw. enthaltende Abfallstoffe); Flugstäube aus thermischen Entsorgungsprozessen, die bisher in Sonderdeponien eingelagert werden mußten; gasförmige Stoffe, die kondensierbare Komponenten enthalten, wie z. B. Brüden mit toxischen Schadstoffen.

## Patentansprüche

1. Verfahren zur thermischen Entsorgung von Abfallstoffen wie z. B. Klärschlamm, Sondermüll oder dergleichen, mit Trocknung und Verbrennung der Abfallstoffe (10), wobei die trockenen bzw. getrockneten Abfallstoffe in einem Zyklon (13) bei hohen Temperaturen oberhalb 1.500°C verbrannt werden unter Bildung einer schmelzflüssigen Schlacke (18) und eines heißen Abgases (19), das mit den Trocknungsabgasen (20) vermischt und das Mischgas in zwei Kühlstufen (21 und 28) abgekühlt wird, wobei ein Teil des Mischgases als Trocknungsgas (12) zur Trocknung bzw. Vorwärmung der Abfallstoffe (10) verwendet wird, dadurch gekennzeichnet, daß aus dem Zyklonabgas (19) nach der ersten Kühlstufe (21) im wesentlichen die aus den Abfallstoffen verflüchtigten metallischen Wertstoffe (25) und nach der zweiten Kühlstufe (28) bei niedrigerer Temperatur im wesentlichen die in der ersten Kühlstufe noch dampfförmig vorliegenden nichtmetallischen Schadstoffe (29) jeweils durch partielle Kondensation abgeschieden werden.

2. Verfahren nach Anspruch 1, dadurch gekennzeichnet, daß die in der ersten Kühlstufe (21) abgeschiedenen Wertstoffe (25) partiell kondensierte Wertstoffstäube sind, die Metalle wie Ag, Zn, Pb enthalten, und daß die in der zweiten Kühlstufe (28) abgeschiedenen Schadstoffe (29) an eingeführte Reagenzien (28a) wie Kalkhydrat partiell kondensierte schadstoffreiche Stäube sind, die Nichtmetalle wie Chlor, Schwefel, Fluor enthalten.

3. Verfahren nach Anspruch 1, dadurch gekennzeichnet, daß beide Kühlstufen (21 und 28) mit zirkulierender Wirbelschicht ausgebildet sind.

4. Verfahren nach Anspruch 1, dadurch gekennzeichnet, daß in den Zyklon (13) zusätzlich zum getrockneten Abfallstoff (14) noch ein anderer zu entsorgender, aber nicht zu trocknender Abfallstoff (16) wie Altöl etc. eingeführt wird.

## Claims

1. A method of thermal disposal of waste materials such as, for example, sewage sludge, special refuse or the like, comprising drying and burning the waste materials (10), the dry or dried waste materials being burnt in a cyclone (13) at high temperatures above 1500°C so as to form a fusible slag (18) and a hot waste gas (19) which is mixed with the drying waste gases (20) and the mixed gas is cooled in two cooling stages (21 and 28), a part of the mixed gas being used as a drying gas (12) for drying or preheating the waste materials (10), characterised in that, after the first cooling stage (21), the substances separated from the cyclone waste gas (19) are substantially the valuable metal meterials (25) volatilised from the waste materials, whereas after the second cooling stage (28) at lower temperature, the main substances separated, by partial condensation in each case, are the non-metallic pollutants (29) which remain in vapour form in the first cooling stage.

2. A method according to claim 1, characterised in that the valuable materials (25) separated in the first cooling stage (21) are partially-condensed dust containing metals such as Ag, Zn and Pb, whereas the pollutants (29) separated in the second cooling stage (28) are in the form of dust rich in pollutants, containing non-metals such as chlorine, sulphur and fluorine, and partially condensed on to introduced reagents (28a) such as slaked lime.

3. A method according to claim 1, characterised in that both cooling stages (21 and 28) are in the form of a circulating fluidised bed.

4. A method according to claim 1, characterised in that, in addition to the dried waste material (14), another waste material (16) such as used oil etc., which is to be disposed of but not dried, is introduced into the cyclone (13).

## Revendications

1. Procédé d'élimination thermique des déchets comme par exemple la boue d'épuration, les ordures spéciales ou équivalents avec séchage et combustion des déchets (10), dans lequel les déchets séchés ou secs sont brûlés dans un cyclone (13) à haute température au-dessus de 1500°C avec formation de scories liquides de fusion (18) et d'un gaz de combustion chaud (19) qui est mélangé aux gaz de combustion de séchage (20) et le gaz mixte est refroidi dans deux stades de refroidissement (21) et (28), une partie du gaz mixte étant utilisée comme gaz de séchage (12) pour le séchage ou le pré-chauffage des déchets (10), caractérisé en ce que les substances de valeur (25) métalliques volatilisées au départ des déchets sont séparées essentiellement après le premier stade de refroidissement (21) du gaz de combustion du cyclone (19) et en ce que après la deuxième étape de refroidissement (28) à température plus basse essentiellement les substances nuisibles non métalliques (29) se présentant encore sous forme de vapeur dans la première étape de refroidissement, sont séparées respectivement par condensation partielle.

2. Procédé selon la revendication 1, caractérisé en ce que les substances de valeur (25) séparées dans la première étape de refroidissement (21) sont des poudres de substances de valeur partiellement condensées, qui renferment des métaux comme Ag, Zn, Pb et en ce que les substances nuisibles (29) séparées dans la deuxième étape de refroidissement (28) sur des réactifs amenés (28a) comme de la chaux hydratée, sont des poudres riches en substances nuisibles partiellement condensées, qui renferment des produits non métalliques comme du chlore, du soufre, du fluor.

3. Procédé selon la revendication 1, caractérisé en ce que les deux étapes de refroidissement (21) et (28) sont réalisées par une couche tourbillonnaire circulante.

4. Procédé selon la revendication 1, caractérisé en ce que l'on introduit dans le cyclone (13) en supplément aux déchets séchés (14), encore d'autres déchets (16) à éliminer mais non à sécher, comme de l'huile usée, etc.
